# EUROPÄISCHE PATENTSCHRIFT

(11) **EP 0 954 707 B1**
(45) Veröffentlichungstag und Bekanntmachung des Hinweises auf die Patenterteilung: **07.11.2001**
(21) Anmeldenummer: 98905334.3
(22) Anmeldetag: 23.01.1998
(51) Int. Cl.: F16C 33/00, B21D 53/10

(54) **VERFAHREN ZUM HERSTELLEN VON FLACHLAGERSCHALEN**
PROCESS FOR MANUFACTURING FLAT BEARING SHELLS
PROCEDE DE FABRICATION DE COQUILLES DE COUSSINET PLATES

(30) Priorität: 24.01.1997 DE 19702444
(43) Veröffentlichungstag der Anmeldung: 10.11.1999
(73) Patentinhaber: KS Gleitlager GmbH, 68789 St. Leon-Rot (DE)
(72) Erfinder: KALDENHOFF, Kurt, D-12307 Berlin (DE); MÄHRLEIN, Matthias, D-12277 Berlin (DE); HOPPMANN, Ralf, D-26842 Ostrhauderfehn (DE); HERMANNS, Hubert, D-26871 Papenburg (DE)
(74) Vertreter: Friz, Oliver
(86) Internationale Anmeldenummer: EP9800346
(87) Internationale Veröffentlichungsnummer: WO9832982

(56) Entgegenhaltungen:
- DE-A- 3 248 634
- DE-C- 3 805 036
- GB-A- 770 228
- GB-A- 2 034 827
- US-A- 1 603 488
- US-A- 4 203 184

## Beschreibung

Die Erfindung betrifft ein Verfahren zum Herstellen von Flachlagerschalen, wobei von einem Bandmaterial Lagerschalenabschnitte abgetrennt werden, diese Abschnitte im wesentlichen halbkreisförmig gebogen, ggf. die Übergangsbereiche von den Trennflächen zu der dem Gleitpartner zugewandten Innenseite angefast werden, und Außen- und Innenseite sowie die Trennflächen der so gebildeten Lagerschale kalibriert werden und wobei an der Innenseite eine von Trennfläche zu Trennfläche verlaufende Ölnut angebracht wird, wobei die Ölnut vor dem Abtrennen eines jeweiligen Lagerschalenabschnitts vom Bandmaterial kontinuierlich in das Bandmaterial eingearbeitet, insbesondere gefräst, geräumt oder gestrählt, wird,

Ein derartiges Verfahren ist aus der GB-A-2 034 827 bekannt. Bei diesem Verfahren erweist sich das Abtrennen als schwierig, da die Nut in ihrem Flankenbereich zur Innenseite der Lagerschale in nachteiliger Weise durch das Abtrennen verformt wird. Daher wurde die Ölnut erst in die halbkreisförmig gebogenen Lageschalenabschnitte eingebracht. Es war daher erforderlich, nach dem Biegen der Lagerschalenabschnitte eine weitere Bearbeitungsstufe vorzusehen, in der ein jeweiliger Lagerschalenabschnitt fixiert und sodann von einem schwenkbaren Fräswerkzeug bearbeitet wird.

Der vorliegenden Erfindung liegt die Aufgabe zugrunde, ein Verfahren zum Herstellen von Flachlagerschalen anzugeben, bei dem das Anbringen der Ölnut gegenüber bekannten Verfahren vereinfacht und eine hierfür benötigte Fräseinrichtung weniger komplex und damit wirtschaftlicher herstellbar und betreibbar ist, ohne dass die eingangs erwähnten Probleme auftreten.

Diese Aufgabe wird bei einem Verfahren der eingangs erwähnten Art erfindungsgemäß dadurch gelöst, daß zum Abtrennen eines jeweiligen Lagerschalenabschnitts ein komplementär zur Querschnittskontur des Bandmaterials nach dem Einarbeiten der Ölnut ausgebildeter Stanzstempel verwendet wird.

Es wurde also erfindungsgemäß erkannt, dass es bei geeigneter vorstehend beschriebener Ausbildung des Stanzstempels möglich ist, die Ölnut bereits in dem Bandmaterial herzustellen, und sodann die jeweiligen Lagerschalenabschnitte abzutrennen, ohne dass die Nut in ihrem Flankenbereich zur Innenseite der Lagerschale in nachteiliger Weise verformt wird. Die erfindungsgemäße Verfahrensführung bringt den Vorteil mit sich, dass die Einrichtung zum Einbringen der Nuten nicht mit einem schwenkbaren Fräswerkzeug ausgestattet werden muss, und dass sie in Bearbeitungsrichtung vor dem Abtrennen der Lagerschalenabschnitte als Fräs-, Räum- oder Strähleinrichtung vorgesehen werden kann. Es erweist sich hierbei als vorteilhaft, wenn die Nut im Zuge der sogenannten Bandmaterialherstellung oder -bearbeitung vorgesehen wird, d.h. in einem Verfahrensschritt, in dem die Breite des Bands besäumt wird oder Längsfasen angebracht werden.

Ein ganz wesentlicher Vorteil der Erfindung besteht darin, dass die Bearbeitungsgeschwindigkeit erhöht werden kann. Bisher konnten nur etwa 45 Teile/min mit einer Länge von jeweils 100 mm gefertigt werden, da die Nutenfräsgeschwindigkeit auf etwa 5 m/min beschränkt war. Wenn die Nut bereits am Bandmaterial eingebracht wird, sind Nutenfräsgeschwindigkeiten von 100 m/min erreichbar, so dass die Nutenfräsgeschwindigkeit nicht mehr die Bearbeitungsgeschwindigkeit begrenzt.

Um zu verhindern, dass beim Abtrennen der Lagerschalenabschnitte vom Bandmaterial ein sogenannter Wechselgrat ausgebildet wird, der entsteht, wenn etwa das in Bearbeitungsrichtung vordere Ende nach unten und das hintere Ende nach oben abgeschert wird, wird hierfür eine Trenneinrichtung mit einem zwei Schneidkanten aufweisenden Untermesser verwendet, und der Stanzstempel wird zwischen diesen beiden Schneidkanten hindurchgeführt, so dass ein der Dicke des Stanzstempels entsprechender Schnittabfall erzeugt wird.

Es hat sich in verfahrenstechnischer Hinsicht als vorteilhaft erwiesen, das Ölloch der Ölnut in einem späteren Verfahrensschritt nach dem Kalibrieren von Außenseite und Trennflächen und vor dem Kalibrieren der Innenseite zu stanzen.

Weitere vorteilhafte Verfahrensvarianten im Zusammenhang mit dem Kalibrieren der Lagerschale ergeben sich aus den Unteransprüchen.

Der Erfindung liegt die weitere Aufgabe zugrunde, ein Stanzwerkzeug zum Abtrennen der Lagerschalenabschnitte vom Bandmaterial bei der Durchführung des erfindungsgemäßen Verfahrens anzugeben.

Diese weitere Aufgabe wird erfindungsgemäß gelöst durch ein Stanzwerkzeug der vorstehend genannten Art, mit einem zwei Schneidkanten aufweisenden Untermesser und einem zwischen diesen beiden Schneidkanten hindurch bewegbaren Stanzstempel, das ferner so ausgebildet ist, dass der Stanzstempel komplementär zur Querschnittskontur des Bandmaterials auf der Nutseite ausgebildet ist und somit einen komplementär zum Grund und den Flanken der Ölnut in dem zu trennenden Bandmaterial ausgebildeten Vorsprung aufweist und dass die Schneidkanten des Untermessers in Richtung auf den Stanzstempel nach oben streben, so dass beim Abscheren an der in Stanzrichtung unteren Seite des Bandmaterials kein über die Unterseite des Bandmaterials überstehender Grat gebildet wird.

Weitere Merkmale, Vorteile und Einzelheiten der Erfindung ergeben sich aus den beigefügten Patentansprüchen sowie der zeichnerischen Darstellung und nachfolgenden Beschreibung einer erfindungsgemäßen Lagerschalenherstellung. In der Zeichnung zeigt:
- Figur 1: ein erfindungsgemäßes Stanzwerkzeug zum Trennen eines Bandmaterials in Lagerschalenabschnitte in einer längsgeschnittenen Ansicht;
- Figur 2: das Stanzwerkzeug nach Figur 1 in einer quergeschnittenen Ansicht;
- Figur 3: eine Ansicht eines des Bandmaterials und eines abgetrennten Lagerschalenabschnitts;
- Figur 4: eine Ansicht eines Preßwerkzeugs zum Bearbeiten der gebogenen Lagerschalenabschnitte;
- Figur 5: eine Ansicht des Preßwerkzeugs nach Fig. 4 gesehen in Richtung der Pfeile V-V in Fig. 4; und
- Figur 6: ein vergrößertes Detail aus Fig. 4.

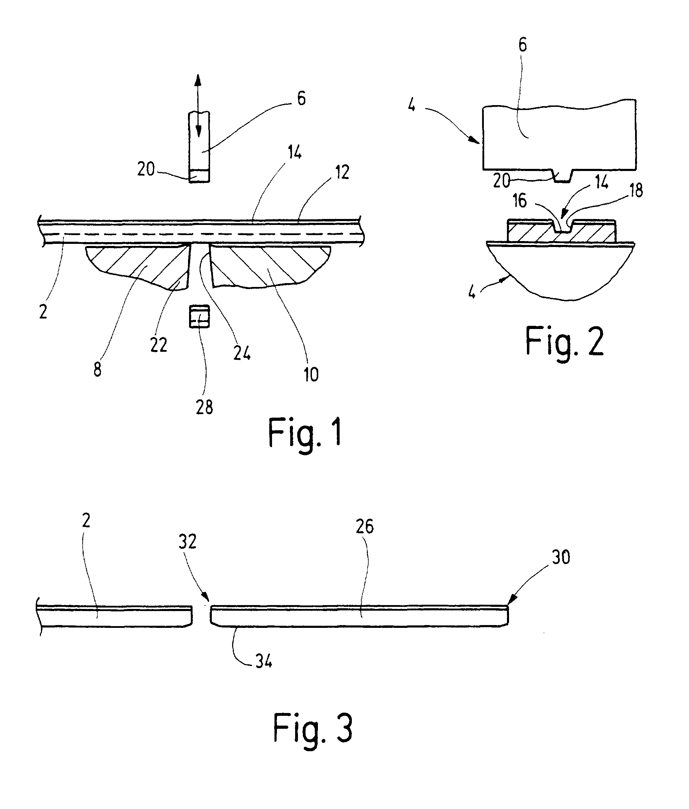

Die Figuren 1 bis 3 zeigen den Vorgang des Abtrennens eines Lagerschalenabschnitts vom Bandmaterial sowie ein hierzu verwendetes Stanzwerkzeug. Mit dem Bezugszeichen 2 ist ein von einer nicht dargestellten Bandrolle kontinuierlich abgewickeltes 2-komponentiges Bandmaterial bezeichnet, von dem mittels des dargestellten Stanzwerkzeugs 4 kontinuierlich Lagerschalenabschnitte abgetrennt werden. Das Stanzwerkzeug 4 umfasst einen ein Obermesser bildenden Stanzstempel 6 sowie zwei Untermesser 8, 10, zwischen denen der Stanzstempel 6 zum Abtrennen eines Lagerschalenabschnitts hindurchgeführt wird. Der Stanzstempel 6 ist komplementär zur Querschnittskontur des Bandmaterials 2 auf seiner dem Stanzstempel 6 zugewandten Seite ausgebildet. Bevor das Band zum Trennen in Lagerschalenabschnitte dem Stanzwerkzeug zugeführt wird, wird auf der dem späteren Gleitpartner zugewandten Oberseite 12 eine in Längsrichtung erstreckte Ölnut 14, durch Fräsen, Strählen oder Räumen eingebracht. Die Ölnut 14 weist einen ebenen und parallel zur Oberseite verlaufenden Nutboden 16 und zur Oberseite 12 geneigt verlaufende Nutflanken 18 auf. Die Struktur des Stanzstempels 6, d.h. des Obermessers, entspricht nun genau der Formgebung bzw. Ausbildung dieser Nut 14. Der Stanzstempel 6 weist also einen komplementär zur Querschnittskontur der Ölnut 14 ausgebildeten Vorsprung 20 auf. Durch eine derartige Ausbildung des Obermessers ist es möglich geworden, die Ölnut 14 kontinuierlich in das Bandmaterial 2 einzubringen, bevor die Lagerschalenabschnitte vom Bandmaterial abgetrennt werden.

Die beiden Untermesser 8, 10 weisen je eine quer zur Längs-bzw. Transportrichtung des Bandmaterials 2 verlaufende Schneidkante 22 bzw. 24 auf. Diese Schneidkanten 22, 24 sind in Richtung auf den Stanzstempel 6 nach oben strebend ausgebildet. Beim Abtrennen eines Lagerschalenabschnitts 26 vom Bandmaterial 2 wird der Stanzstempel 2 nach unten gefahren und zwischen den Schneidkanten 22, 24 der Untermesser 8, 10 hindurchbewegt, so dass beim Abtrennen des Lagerschalenabschnitts 26 ein der Breite des Stanzstempels entsprechendes Abfallstück 28 erzeugt wird. Hierdurch wird das Entstehen eines Wechselgrats bei den abgetrennten Lagerabschnitten 26 verhindert, d.h. es entsteht an der Oberseite 12 des Lagerschalenabschnitts kein am vorderen Ende nach unten und am hinteren Ende nach oben strebender Schneidgrat, sondern die vordere und hintere Trennkante 30 bzw. 32 eines jeweiligen Lagerschalenabschnitts 26 ist in Bewegungsrichtung des Stanzstempels 6 nach unten gezogen. Durch die vorstehend beschriebene Ausbildung der Schneidkanten 22, 24 der Untermesser 8, 10 wird erreicht, dass kein über die der Oberseite 12 des jeweiligen Lagerschalenabschnitts 26 gegenüberliegende Unterseite 34 vorstehender Schneidgrat gebildet wird, der aufwendig entfernt werden müsste oder sich beim Einsetzen der Lagerschale in eine Lagerstelle verhängnisvoll auswirken kann. Beim Niedergehen des Stanzstempels 6 wird das Abfallstück 28 also frühzeitig abgeschert, so dass ein auch in diesem Fall gebildeter Schneidgrat nicht über die Unterseite 34 vorsteht.

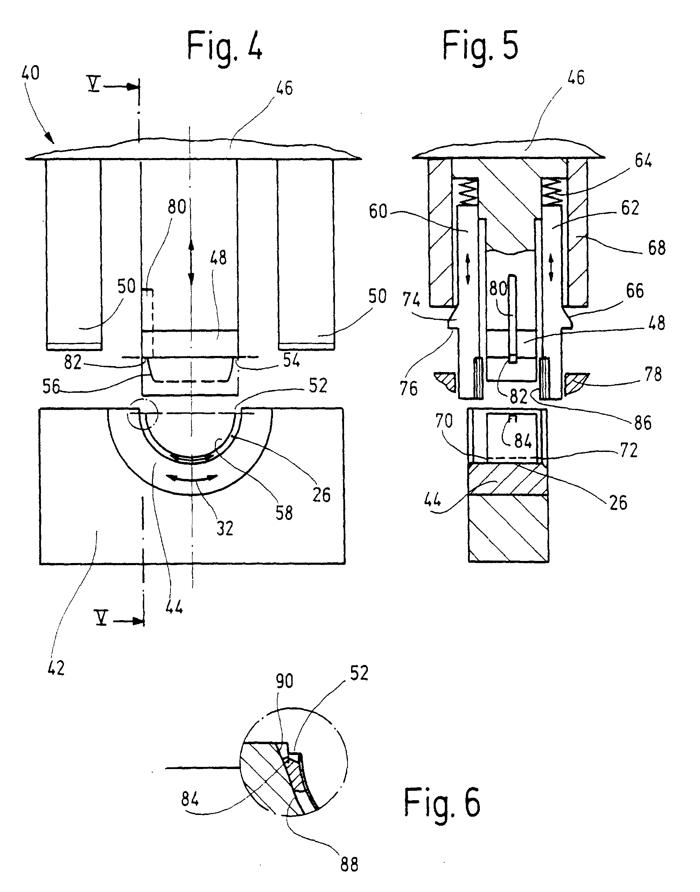

In einem nachfolgenden Verfahrensschritt werden die Lagerschalenabschnitte 26 im Wesentlichen halbkreisförmig gebogen. Dies findet in einer nicht dargestellten Biegevorstufe eines in den Figuren 4 bis 6 dargestellten Presswerkzeugs 40 statt. Nach dem Biegen auf Halbkreisform werden die Lagerschalenabschnitte 26 in die in den Figuren 4 und 5 dargestellte Arbeitsposition des Presswerkzeugs vorzugsweise verschoben, in der dann die Außenseite sowie die Trennflächen der halbkreisförmig gebogenen Lagerschalenabschnitte 26 kalibriert werden.

Das Presswerkzeug 40 umfasst einen Grundaufnahmekörper 42, welcher ein der herzustellenden Außenform der Lagerschale entsprechendes Pressgesenk 44 für die Lagerschalenabschnitte 26 trägt. Über ein andeutungsweise dargestelltes Pressenoberteil 46 ist eine Pressbrücke 48 im Bezug auf das Pressgesenk 44 heb- und senkbar. Die untere Endposition wird über an den Grundaufnahmekörper 42 anstoßende Anschlagblöcke 50 definiert bzw. eingestellt.

Die Pressbrücke 48 weist gegen Trennflächen 52 der Lagerschalenabschnitte 26 anlegbare Presslagerflächen 54 auf. Die Presslagerflächen 54 gehen in einen in die Lagerschale 26 eingreifenden Materialleitabschnitt 56 über. Die genaue Formgebung der Presslagerflächen 54 im Übergangsbereich zum Materialleitabschnitt 56 entspricht der herzustellenden Innenphase im Übergang von den Trennflächen 52 zur Innenseite 58 der Lagerschale 26.

Wie aus der Figur 5 ersichtlich sind beidseits der Pressbrücke 48 seitliche Werkzeugflanken 60 und 62 vorgesehen, die zusammen mit dem Werkzeugoberteil 46 hebund senkbar sind. Die Werkzeugflanken 60, 62 sind über Federmittel an dem Pressenoberteil 46 gehalten und in Stellrichtung der Pressbrücke 48 bewegbar. Die Werkzeugflanken 60, 62 weisen nachfolgend zu erläuternde Zustellschrägen 66 auf, welche beim Betrieb des Presswerkzeugs 40 mit Stellmitteln 68 derart zusammenwirken, dass sie quer zur Schließbewegung des Werkzeugs gegen seitliche Flanken 70, 72 der Lagerschalenabschnitte 26 anlegbar sind. Die jeweilige Zuführschräge 66 ist von einem rampenförmig nach außen laufenden Vorsprung 74 der Werkzeugflanken 60, 62 gebildet, dessen senkrecht zurückführende Rampenflanke 76 eine axiale Anschlagfläche 76 für die seitlichen Werkzeugflanken 60, 62 beim Schließen des Presswerkzeugs bildet. Die axiale Anschlagfläche 76 stößt dabei gegen einen teilweise angedeuteten Tiefenanschlag 78, der dem Grundaufnahmekörper zuzuordnen ist.

An der in Figur 4 linken Seite der Pressbrücke 48 ist ein zusätzlicher Presswerkzeugstempel 80 vorgesehen, welcher über die Presslagerfläche 54 in der Form eines keilförmigen Press- bzw. Stanzvorsprungs 82 vorsteht. Der Presswerkzeugstempel 80 bzw. der keilförmige Vorsprung 82 dienen zum Ausklinken einer in der Figur 6 dargestellten radialen Nase 84.

Die Bearbeitung der halbkreisförmig gebogenen Lagerschalenabschnitte 26 in dem Presswerkzeug 40 funktioniert folgendermaßen: ein Lagerschalenabschnitt 26 wird von der Biegevorstufe in die in den Figuren 4 und 5 dargestellte Bearbeitungsposition des Presswerkzeugs 40 verschoben. Sodann wird das Pressenoberteil 46 in Richtung auf das Pressgesenk 44 abgesenkt. Hierbei schlägt zuerst die axiale Anschlagfläche 76 gegen den Tiefenanschlag 78 an und begrenzt hierdurch die Bewegung der seitlichen Werkzeugflanken 60, 62 (siehe Figur 5). Bei weiterem Absenken des Pressenoberteils 46 gleiten die Stellmittel 68 über die jeweilige Zustellschräge 66 der seitlichen Werkzeugflanken 60, 62 und bewegen diese quer zur Hubrichtung aufeinander zu, bis sie an die seitlichen Flanken 70, 72 der Lagerschale 26 mit ihrem Anlageabschnitt 86 anliegen und somit die Breite der herzustellenden Lagerschale definieren. Gleichzeitig oder wenig später mit dem endgültigen Fixieren der Breite der Lagerschale 26 setzt die Pressbrücke 48 mit ihren beiden Presslagerflächen 54 auf die beiden Trennflächen 52 der Lagerschale 26 auf und staucht diese Trennflächen 52 bzw. die Lagerschale 26.

Über diesen Stauchvorgang beim Niedergehen der Pressbrücke 48 wird die Außenseite 88 der Lagerschale 26 auf Umfangslänge kalibriert und es werden gleichzeitig die Trennflächen 52 auf ihre endgültige Form gebracht, ohne dass eine weitere Trennflächenbearbeitung etwa durch Räumen der Trennflächen erforderlich wird. Die Bewegung der Pressbrücke 48 wird durch Anstoßen der Anschläge 50 gegen den Grundaufnahmekörper 42 des Presswerkzeugs 40 gestoppt. Die Lagerschale 26 weist nun ihre endgültige Umfangslänge auf. Bei diesem Stauchprozess wird Material der Lagerschale 26 in Umfangsrichtung der Lagerschale verdrängt. Dass dies nicht in unkontrollierter Weise geschieht wird durch den Materialleitabschnitt im Übergangsbereich der Presslagerflächen 54 zur Innenseite der Lagerschale erreicht und dadurch, dass während des Stauchens der Trennflächen 52 die seitlichen Werkzeugflanken 60, 62 die Lagerschale 26 stützen und die schlussendlich erwünschte Lagerschalenbreite genau definieren.

Beim Kalibrieren der Außenseite 88 bzw. der Trennflächen 52 durch den vorstehend beschriebenen Stauchprozess wird desweiteren durch den keilförmigen Stanzvorsprung 82 des zusätzlichen Presswerkzeugstempels 80 die radiale Nase 84 in eine zu diesem Zweck vorgesehene radiale Ausnehmung 90 in dem Pressgesenk 44 ausgeklinkt. Wird die radiale Nase 84 in dieser bevorzugten Weise beim Kalibrieren der Außenseite 88 und der Trennflächen 52 der Lagerschale 26 ausgeklinkt, so kann auf ein Freifräsen der ausgeklinkten Nase von innen verzichtet werden, da diese Formgebung bereits beim Ausklinken durch das Presswerkzeug ausgebildet werden kann.

Zum Ausschieben der Gleitlagerschale 26 aus der dargstellten Bearbeitungsposition innerhalb des Presswerkzeugs 40 wird auf diejenige Trennfläche 52, welche der Nase 84 gegenüberliegt mittels eines schwenkhebelartigen Drückers o.dgl. in Umfangsrichtung 92 ein geringfügiger Stellimpuls ausgeübt, so dass sich die Lagerschale 26 in Umfangsrichtung 92 gegenüber dem Pressgesenk 44 derart verdreht, dass die radiale Nase 84 aus der Ausnehmung 90 freikommt, so dass die Lagerschale 26 aus dem Pressgesenk 44 von einem Schieber ausgeschoben werden kann.

In nachfolgenden Bearbeitungsschritten wird nun ggf. noch ein Ölloch eingebracht. Schließlich braucht lediglich noch die Innenseite in an sich bekannter Weise unter Verwendung einer in axialer Richtung hindurchbewegten Räumnadel kalibriert zu werden.

## Patentansprüche

1. Verfahren zum Herstellen von Flachlagerschalen, wobei von einem Bandmaterial (2) Lagerschalenabschnitte (26) abgetrennt werden, diese Abschnitte im wesentlichen halbkreisförmig gebogen, und Außen- und Innenseite (88, 58) sowie die Trennflächen (52) der so gebildeten Lagerschale kalibriert werden und wobei an der Innenseite (58) eine von Trennfläche (52) zu Trennfläche (52) verlaufende Ölnut (14) angebracht wird, wobei die Ölnut (14) vor dem Abtrennen eines jeweiligen Lagerschalenabschnitts (26) vom Bandmaterial (2) kontinuierlich in das Bandmaterial eingearbeitet, insbesondere gefräst, geräumt oder gestrählt, wird, **dadurch gekennzeichnet, dass** zum Abtrennen eines jeweiligen Lagerschalenabschnitts (26) ein komplementär zur Querschnittskontur des Bandmaterials (2) nach dem Einarbeiten der Ölnut (14) ausgebildeter Stanzstempel (6) verwendet wird.

2. Verfahren zum Herstellen von Flachlagerschalen nach Anspruch 1, **dadurch gekennzeichnet, dass** die Ölnut (14) vor dem Aufwickeln des auf Breite besäumten Bandmaterials (2) auf eine Haspel eingearbeitet wird.

3. Verfahren nach Anspruch 1 oder 2, **dadurch gekennzeichnet, dass** beim Abtrennen der Lagerschalenabschnitte (26) vom Bandmaterial (2) das Entstehen eines Wechselgrats bei den Lagerschalenabschnitten verhindert wird, indem ein zwei Schneidkanten (22, 24) aufweisendes Untermesser (8, 10) verwendet wird, zwischen denen der Stanzstempel (6) hindurchgeführt wird.

4. Verfahren nach Anspruch 1,2 oder 3, **dadurch gekennzeichnet, dass** in einem späteren Verfahrensschritt nach dem Kalibrieren von Außenseite (88) und Trennflächen (52) und vor dem Kalibrieren der Innenseite (58) ein Ölloch gestanzt wird.

5. Verfahren nach einem der vorstehenden Ansprüche, **dadurch gekennzeichnet, dass** Außenseite (88) sowie Trennflächen (52) der nach dem Abtrennen auf Halbkreisform gebogenen Lagerschalenabschnitte (26) durch Stauchen der Trennflächen (52) in einem Preßwerkzeug (40) kalibriert werden und daß die Innenseite (58) in einem späteren Verfahrensschritt durch Räumen kalibriert wird.

6. Verfahren nach Anspruch 5, **dadurch gekennzeichnet, dass** beim Stauchen der Trennflächen (52) im Bereich des Übergangs von den Trennflächen (52) zur Innenseite (58) der Lagerschalen Fasen geprägt werde.

7. Verfahren nach Anspruch 5 oder 6, **dadurch gekennzeichnet, dass** die gebogenen Lagerschalenabschnitte (26) während des Preßvorgangs beidseits ihrer Längsrichtung in dem Preßwerkzeug (40) gestützt werden.

8. Verfahren nach Anspruch 5, 6 oder 7, **dadurch gekennzeichnet, dass** beim Stauchen der Trennflächen (52) eine radiale Nase (84) in eine Ausnehmung (90) des Preßwerkzeugs (40) ausgeklinkt wird.

9. Verfahren nach Anspruch 8, **dadurch gekennzeichnet, dass** die Schale nach dem Ausklinken der Nase (84) durch Drücken auf die der Nase gegenüberliegende Trennfläche (52) derart gedreht wird, daß sie aus der Ausnehmung (90) des Preßwerkzeugs (40) freikommt und nach Öffnen des Preßwerkzeugs (40) ausgeschoben werden kann.

10. Stanzwerkzeug (4) zum Abtrennen der Lagerschalenabschnitte (26) vom Bandmaterial (2) bei der Durchführung des Verfahrens nach einem oder mehreren der vorstehenden Ansprüche, mit einem zwei Schneidkanten (22, 24) aufweisenden Untermesser (8, 10) und einem zwischen diesen hindurch bewegbaren Stanzstempel (6), wobei der Stanzstempel einen komplementär zum Boden (16) und den Flanken (18) der Ölnut (14) in dem zu trennenden Bandmaterial (2) ausgebildeten Vorsprung (20) aufweist und dass die Schneidkanten (22, 24) des Untermessers in Richtung auf den Stanzstempel (6) nach oben streben, so dass beim Abscheren an der in Stanzrichtung unteren Seite (34) des Bandmaterials (2) kein über die Unterseite (34) des Bandmaterials (2) überstehender Grat gebildet wird.

## Claims

1. Process for producing flat bearing shells, bearing shell sections (26) being separated from a strip material (2), these sections being bent substantially in the shape of a semicircle, and external face and internal face (88, 58) and the separating faces (52) of the bearing shell formed in this way being calibrated, and an oil groove (14) extending from separating face (52) to separating face (52) being provided on the internal face (58), the oil groove (14) being continuously worked, in particular milled, reamed or blasted, into the strip material prior to separation of a respective bearing shell section (26) from the strip material (2), **characterised in that** a punch (6) formed in a manner complementary to the cross-sectional contour of the strip material (2) after incorporation of the oil groove (14) is used to separate a respective bearing shell section (26).

2. Process for producing flat bearing shells according to claim 1, **characterised in that** the oil groove (14) is incorporated onto a capstan prior to winding of the strip material (2) trimmed along its width.

3. Process according to claim 1 or 2, **characterised in that** when the bearing shell sections (26) are separated from the strip material (2) formation of a change-over ridge in the bearing shell sections is prevented **in that** a bottom blade (8, 10) with two cutting edges (22, 24) is used, between which cutting edges (22, 24) the punch (6) is passed through.

4. Process according to claim 1, 2 or 3, **characterised in that** an oil hole is punched in a subsequent process step, after the calibration of the external face (88) and separating faces (52) and prior to calibration of the internal face (58).

5. Process according to one of the preceding claims, **characterised in that** the external face (88) and separating faces (52) of the bearing shell section (26) bent into a semicircular shape after separation are calibrated by compressing the separating faces (52) in a pressing tool (40), and **in that** the internal face (58) is calibrated by reaming in a later process step.

6. Process according to claim 5, **characterised in that** bevels are stamped in the region of the transition from the separating faces (52) to the internal face (58) of the bearing shells during compression of the separating faces (52).

7. Process according to claim 5 or 6, **characterised in that** during the pressing process the bent bearing shell sections (26) are supported in the pressing tool (40) on either side of their longitudinal direction.

8. Process according to claim 5, 6 or 7, **characterised in that** a radial nose (84) is notched into a recess (90) of the pressing tool (40) during compression of the separating faces (42).

9. Process according to claim 8, **characterised in that** the shell is rotated after notching of the nose (84) by pressing on the separating face (52) remote from the nose in such a way that it is released from the recess (90) of the pressing tool (40) and can be pushed out after the pressing tool (40) has been opened.

10. Punching tool (4) for separating the bearing shell sections (26) from the strip material (2) when carrying out the process according to one or more of the preceding claims, with a lower blade (8, 10) comprising two cutting edges (22, 24) and a punch (6) which can be moved through these, the punch having a projection (20) formed in a manner complementary to the base (16) and the edges (18) of the oil groove (14) in the strip material (2) to be separated, and in that the cutting edges (22, 24) of the lower blade reach upwards in the direction of the punch (6), so during shearing off at the lower side (34) of the strip material (2) in the punch direction no ridge projecting beyond the bottom (34) of the strip material (2) is formed.

## Revendications

1. Procédé de fabrication de coquilles de coussinet plates, dans lequel des portions de coquilles de coussinet (26) sont découpées à partir d'une bande de matériau (2) puis cintrées selon une forme sensiblement semi-circulaire, les faces externe et interne (88, 58) ainsi que les surfaces de séparation (52) des coquilles de coussinet ainsi formées étant calibrées, et une rainure de lubrification (14) reliant les deux surfaces de séparation (52) étant pratiquée sur la face interne (58), ladite rainure de lubrification (14) étant usinée en continu dans la bande de matériau (2), en particulier par fraisage, brochage ou grenaillage, avant découpe d'une portion de coquille de coussinet (26) dans ladite bande de matériau (2), **caractérisé en ce que** pour découper une portion de coquille de coussinet (26), on utilise un poinçon (6) de forme complémentaire au profil de la section transversale de la bande de matériau (2) après usinage de ladite rainure de lubrification (14).

2. Procédé de fabrication de coquilles de coussinet plates selon la revendication 1, **caractérisé en ce que** la rainure de lubrification (14) est pratiquée avant enroulement sur un dévidoir de la bande de matériau (2) rognée en largeur.

3. Procédé selon la revendication 1 ou 2, **caractérisé en ce que** lors de la découpe des portions de coquille de coussinet (26) dans la bande de matériau (2), on empêche la formation d'une bavure sur les portions de coquille de coussinet en utilisant un dispositif de coupe inférieur (8, 10) présentant deux arêtes tranchantes (22, 24) entre lesquelles est guidé le poinçon (6).

4. Procédé selon la revendication 1, 2 ou 3, **caractérisé en ce qu'**un orifice de lubrification est poinçonné lors d'une étape ultérieure située après le calibrage de la face externe (88) et des surfaces de séparation (52) et avant le calibrage de la face interne (58).

5. Procédé selon l'une des revendications précédentes, **caractérisé en ce que** la face externe (88) et les surfaces de séparation (52) des portions de coquille de coussinet (26) cintrées selon une forme semi-circulaire après découpe sont calibrées par refoulement des surfaces de séparation (52) dans un outil de presse (40) et **en ce que** la face interne (58) est calibrée par brochage lors d'une étape ultérieure.

6. Procédé selon la revendication 5, **caractérisé en ce que** des chanfreins sont matricés lors du refoulement des surfaces de séparation (52) au niveau de la transition entre les surfaces de séparation (52) et la face interne (58) des coquilles de coussinet.

7. Procédé selon la revendication 5 ou 6, **caractérisé en ce que**, pendant l'opération de presse, les portions de coquille de coussinet cintrées (26) sont soutenues des deux côtés de leur direction longitudinale dans l'outil de presse (40).

8. Procédé selon la revendication 5, 6 ou 7, **caractérisé en ce que** lors du refoulement des surfaces de séparation (52) un nez radial (84) est refoulé dans un évidemment (90) de l'outil de presse (40).

9. Procédé selon la revendication 8, **caractérisé en ce qu'**après refoulement du nez (84), on fait pivoter la coquille en appuyant sur la surface de séparation (52) en regard du nez de façon à dégager ledit nez de l'évidemment (90) de l'outil de presse (40) et à pouvoir extraire ladite coquille après ouverture de l'outil de presse (40).

10. Outil de découpage (4) pour découper les portions de coquille de coussinet (26) dans la bande de matériau (2) dans le cadre de la mise en oeuvre du procédé selon l'une ou plusieurs des revendications précédentes, avec un dispositif de coupe inférieur (8, 10) à deux arêtes tranchantes (22, 24) et un poinçon (6) apte à se déplacer entre les deux arêtes tranchantes précitées, le poinçon présentant un ressaut (20) de forme complémentaire au fond (16) et aux flancs (18) de la rainure de lubrification (14) pratiquée dans la bande de matériau à découper (2), et les arêtes tranchantes (22, 24) du dispositif de coupe inférieur étant orientées vers le haut en direction du poinçon (6), de manière à ce qu'il ne se forme aucune bavure en débordement de la face inférieure (34) de la bande de matériau (2) lors de la découpe au niveau de la face inférieure (34) (dans le sens de matriçage) de la bande de matériau (2).
